# NOUVEAU FASCICULE DE BREVET EUROPEEN

(11) **EP 0 458 701 B2**
(45) Date de publication et mention de la décision concernant l'opposition: **12.08.1998**
(45) Mention de la délivrance du brevet: 02.03.1994
(21) Numéro de dépôt: 91401326.3
(22) Date de dépôt: 23.05.1991
(51) Int. Cl.: F16L 33/02

(54) **Collier de serrage**
Schlauchschelle
Hose clip

(30) Priorité: 23.05.1990 FR 9006476
(43) Date de publication de la demande: 27.11.1991
(73) Titulaire: Etablissements CAILLAU, F-92130 Issy-les-Moulineaux (FR)
(72) Inventeur: Calmettes, Lionel, F-41200 Romorantin Lanthenay (FR); André, Michel, F-41200 Romorantin Lanthenay (FR)
(74) Mandataire: Descourtieux, Philippe

(56) Documents cités:
- EP-A- 3 192
- EP-A- 344 132
- DE-B- 487 202
- FR-A- 2 470 275
- GB-A- 778 861
- US-A- 1 349 789
- US-A- 1 379 476
- US-A- 1 705 895
- US-A- 2 012 543
- US-A- 2 768 418
- US-A- 3 189 961
- US-A- 3 475 793
- US-A- 4 305 179
- US-A- 4 308 648
- US-A- 4 380 096
- US-A- 4 402 113
- US-A- 4 802 646
- US-A- 4 821 373
- US-A- 4 907 319
- US-A- 4 987 652

## Description

Le brevet EP-A-3192 a décrit un collier de serrage constitué par une bande de métal enroulée sur elle-même, dont les deux extrémités sont respectivement pourvues d'un pli radial simple, formant point d'appui pour le serrage du collier au moyen d'un outil du genre pince.

Le pli radial de l'une des extrémités de la bande, de préférence de l'extrémté du brin extérieur, est muni d'un crochet susceptible de passer derrière le pli radial de l'autre extrémité, au cours de l'opération de serrage du collier, en vue de s'y accrocher et de maintenir ainsi le collier dans sa position serrée. D'autre part, l'extrémité du brin intérieur de la bande, dont le pli radial est de préférence sans crochet, se prolonge au-delà dudit pli au moins au-delà du crochet dans la position fermée du collier.

Un tel collier de serrage qui correspond au préambule de la revendication est largement utilisé dans l'industrie, notamment dans la construction automobile, en particulier pour assurer la fixation d'un tuyau souple emmanché sur un tube rigide.

Un collier de ce type est également décrit dans le brevet FR-A-2.470.275 et il comporte en outre une pluralité d'ondulations susceptibles de constituer des réserves d'élasticité, permettant de compenser les variations du diamètre du tuyau à serrer. Ces ondulations sont normalement disposées sur la partie courante de la bande, dans des zones quelque peu éloignées du pli radial supportant le crochet.

On s'est cependant aperçu que, dans le cas de colliers de petit diamètre, des difficultés surviennent au moment soit du montage, soit du démontage du collier, en raison de la flexibilité insuffisante du crochet dont est muni l'un des plis radiaux, en général celui de l'extrémité du brin extérieur de la bande.

L'invention a pour objet d'améliorer les colliers du type qui vient d'être sommairement rappelé en vue, notamment, d'augmenter la flexibilité du crochet pour faciliter le montage et de démontage.

Selon l'invention, on prévoit, à la base du pli radial simple équipé du crochet, au moins une ondulation de la bande, la distance maximale entre la face intérieure de l'ondulation et la face extérieure du prolongement de l'extrémité interne de la bande étant, à l'état non serré du collier, au plus égale à l'épaisseur de la bande et, de préférence, comprise entre le tiers et la moitié de cette épaisseur.

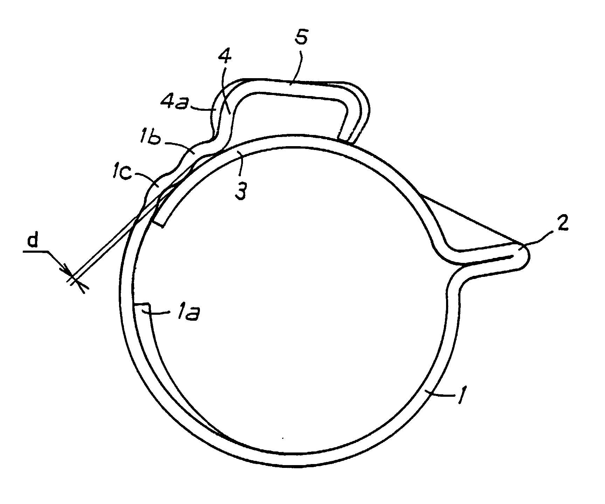

L'invention sera mieux comprise et ses avantages apparaîtront au cours de la description d'un mode de réalisation en référence au dessin annexé, dans lequel la figure unique est une vue en élévation d'un collier de serrage conforme à l'invention.

Si l'on se reporte au dessin, on voit un collier du type décrit dans le brevet européen précité. La bande métallique 1, enroulée sur elle-même, comporte au voisinage de l'extrémité du brin intérieur une oreille **2** constituée par un pli radial, lequel est lié à un prolongement **3** situé sous le brin extérieur. Ce dernier comporte également un pli radial simple **4** généralement renforcé par une nervure **4a** et muni d'un crochet **5**.

A l'état fermé et non serré du collier, tel qu'il est représenté sur le dessin, le crochet **5** est situé à quelque distance de l'oreille **2** mais le prolongement **3** s'étend déjà au-delà du pli **4**. De préférence, ainsi qu'on le voit, le bord terminal du prolongement **3** présente une forme de fourchette susceptible de coopérer avec un bossage **1a** faisant radialement saillie sur la face interne de la bande, ainsi qu'on l'a décrit dans le brevet EP-A-243 224.

A la base du pli radial **4**, la bande **1** présente deux petites ondulations **1b** et **1b**, mais on notera dès maintenant qu'il pourrait n'en exister qu'une seule. La distance maximale **d** entre la face intérieure de l'ondulation **1b** et la face extérieure du prolongement **3** est faible, c'est-à-dire inférieure à l'épaisseur de la bande **1** et de préférence comprise entre le tiers et la moitié de cette épaisseur. Il en sera de même, en général, en ce qui concerne l'ondulation **1c**.

Au moment du serrage du collier, l'outil prend appui sur l'oreille **2** et le pli **4** pour faire passer le crochet **5** de la seconde derrière la première. Dans l'exemple représenté, le prolongement **3** s'étend au-delà du pli **4**. Il est essentiel qu'en position fermée et non serrée du collier ce prolongement s'étende sous le crochet **5** au moins jusqu'au pli **4**. Il est préférable que ce prolongement s'étende sous la plus éloignée des ondulations **1b** et **1c**.

La présence de l'ondulation **1b** (éventuellement de l'ondulation **1c**) facilite le mouvement de basculement du pli **4** et de son crochet **5** lorsqu'il franchit l'obstade que constitue l'oreille **2**. En effet, la déformation de la base du pli **4** reste dans le domaine élastique et l'accrochage sur l'oreille **2** s'effectue plus franchement que sur les colliers connus. De même, si l'on veut démonter le collier par dégrafage du crochet **5** de l'oreille **2**, le mouvement de basculement indispensable du pli **4** est à nouveau facilité.

## Revendications

1. Collier de serrage constitué par une bande métallique *(1)* enroulée sur elle-même, dont les extrémités sont respectivement munies de moyens complémentaires d'accrochage comportant un crochet *(5)* dont est munie l'extrémité d'un pli radial simple *(4)*, ce crochet étant susceptible de passer derrière un pli ou oreille *(2)* au cours de l'opération de serrage, l'extrémité intérieure de la bande se prolongeant, dans la position fermée du collier, au moins au-delà du crochet, cependant que la bande métallique comporte au moins une ondulation, caractérisé en ce que l'ondulation *(1b)* est prévue à la base du pli radial simple *(4)* dont l'extrémité est munie du crochet *(5)*, la distance maximale entre la face intérieure de l'ondulation et la face extérieure du prolongement *(3)* de l'extrémité intérieure de la bande étant, à l'état non serré du collier, au plus égale à l'épaisseur de la bande et de préférence comprise entre un tiers et la moitié de cette épaisseur.

## Patentansprüche

1. Schelle bestehend aus einem aufgerollten Metallband (1), dessen Enden jeweils mit komplementären Verhakungsmitteln versehen sind, welche einen Haken (5) aufweisen, der am Ende einer einfachen radialen Abbiegung (4) angeordnet ist, wobei der Haken beim Klemmvorgang hinter eine Schulter oder einen Ansatz (2) gelangen kann, wobei das innere Ende des Bandes in der geschlossenen Position der Schelle zumindest über den Haken hinaus verlängert ist und wobei das Metallband mindestens eine Wellung aufweist, dadurch gekennzeichnet, daß
die Wellung (1b) an der Basis der einfachen radialen Abbiegung (4) vorgesehen ist, deren Ende mit dem Haken (5) versehen ist, wobei der maximale Abstand zwischen der Innenseite der Wellung und der Außenseite der Verlängerung (3) des inneren Endes des Bandes im nicht geklemmten Zustand der Schelle höchstens gleich der Dicke des Bandes ist und vorzugsweise ein Drittel bis die Hälfte dieser Dicke beträgt.

## Claims

1. Clamp constituted by a metal band (*1*) wound on itself, the ends of which are respectively equipped with complementary catching means which include a hook (*5*) with which the end of a single radial fold (*4*) is provided, this hook being capable of passing behind a fold or lug (*2*) in the course of the clamping operation, the inner end of the band being prolonged, in the closed position of the clamp, at least beyond the hook, while the metal band includes at least one undulation, characterized in that the undulation (*1b*) is provided at the base of the single radial fold (*4*) whose end is provided with the hook (*5*), the maximum distance between the inner face of the undulation and the outer face of the prolongation (*3*) of the inner end of the band being, in the unclamped state of the clamp, at most equal to the thickness of the band and preferably lying between one third and one half of this thickness.
